# EUROPÄISCHE PATENTSCHRIFT

(11) **EP 3 622 471 B1**
(45) Veröffentlichungstag und Bekanntmachung des Hinweises auf die Patenterteilung: **17.04.2024**
(21) Anmeldenummer: 18723804.3
(22) Anmeldetag: 08.05.2018
(51) Int. Cl.: G06Q 10/00, G06Q 10/06, G06Q 50/04, G06Q 10/0639, G06Q 10/20, G05B 19/042, G05B 19/418

(54) **VERFAHREN ZUR ÜBERWACHUNG EINES FERTIGUNGSPROZESSES**
METHOD FOR MONITORING A MANUFACTURING PROCESS
PROCÉDÉ DE SURVEILLANCE D'UN PROCESSUS DE FABRICATION

(30) Priorität: 11.05.2017 DE 102017207992
(43) Veröffentlichungstag der Anmeldung: 18.03.2020
(73) Patentinhaber: HOMAG GmbH, 72296 Schopfloch (DE)
(72) Erfinder: FRICK, David, 72149 Neustetten (DE); FRIEBOLIN, Manuel, 75365 Calw-Sth. (DE); GRAF, Joachim, 72189 Vöhringen (DE); KÜHNE, Andreas, 72189 Vöhringen (DE)
(74) Vertreter: Hoffmann Eitle
(86) Internationale Anmeldenummer: PCT/EP2018/061810
(87) Internationale Veröffentlichungsnummer: WO 2018/206548

(56) Entgegenhaltungen:
- WO-A1-01/96829
- WO-A1-2014/139761
- WO-A1-2015/140043
- DE-A1- 10 128 016
- DE-A1-102008 004 603
- DE-A1-102013 204 409
- DE-A1-102014 204 969
- US-A1- 2014 125 577
- US-A1- 2014 359 540
- RE GUIDO MARIA ET AL: "An Augmented Reality Framework for Supporting and Monitoring Operators during Maintenance Tasks", 22. Juni 2014 (2014-06-22), Virtual, Augmented and Mixed Reality. Applications of Virtual and Augmented Reality. 6th International Conference, VAMR 2014, Held as Part of HCI International 2014. Proceedings: LNCS 8526, XP047295584, ISSN: 0302-9743 ISBN: 978-3-030-00888-8 Zusammenfassung; Abbildungen 1-6 Seite 443, Absatz 1 - Seite 452, Absatz 5
- RAMAKRISHNA PERLA ET AL: "An AR Inspection Framework: Feasibility Study with Multiple AR Devices", 2016 IEEE INTERNATIONAL SYMPOSIUM ON MIXED AND AUGMENTED REALITY (ISMAR-ADJUNCT), IEEE, 19. September 2016 (2016-09-19), Seiten 221-226, XP033055451, DOI: 10.1109/ISMAR-ADJUNCT.2016.0080 [gefunden am 2017-01-30]

## Beschreibung

### Technisches Gebiet

Die vorliegende Erfindung betrifft ein Verfahren zur Überwachung eines Fertigungsprozesses. Der Fertigungsprozess kann beispielsweise die Bearbeitung eines plattenförmigen Werkstücks betreffen, wie einer Vollholzplatte, einer Spanplatte, einer MDF-Platte, einer HDF-Platte, oder ein Werkstück aus einem anderen Holzwerkstoff. Ein solches Werkstück kann im Bereich der Möbel- oder Bauelementeindustrie zum Einsatz kommen.

### Stand der Technik

Die stark gestiegene Nachfrage individuell auf einen bestimmten Kunden zugeschnittener Möbelprodukte, wie bspw. Komplettküchen- und Badmöbelanordnungen, erfordern vom jeweiligen Hersteller, flexibel auf individuelle Kundenanforderungen einzugehen und entsprechend zu produzieren. Konsequenterweise führt die individualisierte Fertigung dazu, dass für die einzelnen Herstellungsschritte ebenfalls individuelle Daten erstellt, überwacht und aktualisiert werden müssen, da nicht nur für eine Charge gleicher Werkstücke, sondern ggf. für jedes Werkstück einzeln ein entsprechender Datensatz vorgehalten werden muss.

Dabei stellt die Aktualisierung des Datensatzes eine große Herausforderung dar, denn zum einen ändern sich werkstückbezogene Daten bei jeder Bearbeitung (bspw. wird die Breite eines Werkstücks durch einen Schnitt reduziert), und zum anderen sollte eine solche Aktualisierung idealerweise unverzüglich erfolgen.

Eine zusätzliche Herausforderung ergibt sich bei der Fertigung von Bauteilen in einer Arbeitsumgebung, bei der Bearbeitungsmaschinen nicht durch Transporteinheiten miteinander verknüpft sind, sondern ein Mitarbeiter händisch in den Fertigungsprozess eingreift. Die Handhabung und der Transport der Werkstücke zwischen verschiedenen Bearbeitungsschritten oder Bearbeitungsmaschinen führt dazu, dass sich der reale Produktionsablauf von den aktuell hinterlegten Daten des Werkstücks entkoppelt, da die Reihenfolge und der Zeitpunkt, zu dem die Werkstücke an einer jeweiligen Bearbeitungsmaschine ankommen, variabel sind und vom Menschen beeinflusst werden.

Um die Erkennung von Werkstücken in einer solchen Arbeitsumgebung zu gewährleisten, ist es bekannt, Werkstücke zu deren Identifikation mit Hilfe eines Barcodes oder eines Etiketts zu versehen. Dabei ist es jedoch nachteilig, dass ein am Werkstück aufgebrachtes Etikett entfernt werden kann, oder im Zuge der Bearbeitung entfernt wird, bspw. wenn der entsprechende Abschnitt des Werkstücks abgetrennt wird. Eine Markierung mit einem aufgedruckten Barcode kann gegebenenfalls generell unerwünscht sein. WO2015/140043 offenbart eine mobile Datenerfassungsvorrichtung, die Daten von einem manuellen Arbeitsvorgang an einem Werkstück in zeitlich aufeinander folgenden Schritten erfasst und speichert.

### Gegenstand der Erfindung

Ziel der vorliegenden Erfindung ist es, ein Verfahren bereitzustellen, mit dem die bei der individualisierten Fertigung von Werkstücken auftretenden Nachteile weiter reduziert werden und/oder die Prozesssicherheit erhöht wird.

Der Gegenstand des Anspruchs 1 stellt ein entsprechendes Verfahren bereit. Weitere bevorzugte Ausführungsformen sind in den abhängigen Ansprüchen aufgeführt.

Das in der Anmeldung beschriebene Verfahren umfasst u.a. die folgenden Schritte: Erfassen eines Werkstücks mit einer Sensoreinheit einer tragbaren Vorrichtung, Senden der durch die Sensoreinheit erfassten Informationen an eine Datenbank und Anlegen eines werkstückspezifischen Datensatzes, Erfassen des Werkstücks vor, während und/oder nach Durchführung eines Bearbeitungsschrittes oder eines Handhabungsschrittes am Werkstück durch die Sensoreinheit der tragbaren Vorrichtung, Aktualisieren des in der Datenbank hinterlegten Datensatzes vor, während und/oder nach Durchführung eines Bearbeitungsschrittes oder Handhabungsschritts am Werkstück.

Beim genannten Werkstück handelt es sich um ein plattenförmiges oder ein Freiformflächen aufweisendes Werkstück nämlich eine Vollholzplatte, eine Spanplatte, eine MDF-Platte, eine HDF-Platte, oder eine Platte aus Verbundwerkstoffen.

Die tragbare Vorrichtung ist eine eine Datenbrille. Ferner kann ein Datenhandschuh mit der tragbaren Vorrichtung interagieren.

Eine Datenbrille hat den Vorteil, dass der Nutzer diese stets mitführen und nach Bedarf Informationen abrufen kann, die ihm direkt im Sichtfeld angezeigt werden. Mit einer Datenbrille können Informationen in einer "erweiterten Realität" ("augmented reality") angezeigt werden. Weitere Vorteile einer Datenbrille werden nachfolgend beschrieben.

Bei einem Tabletcomputer, einem Mobiltelefon (Smartphone) oder einer Smartwatch können mehrere Funktionen in einer tragbaren Vorrichtung vereint werden. Die genannten Geräte sind derart ausgestaltet, dass ein Nutzer ein solches Gerät stets mit sich führen kann.

Ein Datenhandschuh kann sowohl zur Ermittlung von Informationen, als auch zur Steuerung mittels Gesten oder, wenn der Datenhandschuh selbst mit einer Anzeigevorrichtung ausgestattet ist, zur Anzeige von Informationen genutzt werden.

Es ist bevorzugt, dass die tragbare Vorrichtung dem Nutzer Handlungsanweisungen, Warnhinweise, eine Bestätigung einer Aktivität und/oder ein Bedienfeld zur Aktivierung, Betätigung und/oder Überwachung einer Bearbeitungsmaschine anzeigt, insbesondere in einer "erweiterten Realität" ("augmented reality"). Somit kann der "Arbeitsplatz" des Nutzers gewissermaßen mitgeführt werden und verschiedene Funktionen sind stets verfügbar.

Es ist bevorzugt, dass das Erfassen des Werkstücks berührungslos, insbesondere mittels der als Kamera ausgebildeten Sensoreinheit, weiter bevorzugt einer 3D-Kamera, erfolgt. Auf diese Weise können Arbeitsabläufe weiter beschleunigt werden.

In einer Ausführungsform ist es vorgesehen, dass das Erfassen des Werkstücks basierend auf zumindest einer Werkstückdimension, wie der Breite, Höhe, Dicke und/oder der Fläche einer Seite des Werkstücks, der Farbe des Werkstücks, dem Glanzgrad der Werkstückoberfläche, einer Materialeigenschaft, einem Kantenmaterial, einer Beschichtung und/oder dem Nut- oder Bohrbild des Werkstücks vorgenommen wird. Die ermittelte Information kann in einem Datensatz zusammengefasst und zur Identifizierung herangezogen werden.

Ferner ist es bevorzugt, dass die tragbare Vorrichtung ein Datenübertragungsmodul zur drahtlosen Datenübertragung aufweist, welches insbesondere in ein lokales Netzwerk eingebunden ist. Somit ist die tragbare Vorrichtung äußerst flexibel einzusetzen.

Gemäß einer weiteren Variante ist es bevorzugt, dass die tragbare Vorrichtung einen Positionssensor umfasst. Somit kann die Position der tragbaren Vorrichtung ermittelt werden. Beispielsweise wird eine Triangulationsverfahren eingesetzt. Bevorzugt weist die tragbare Vorrichtung ferner einen oder mehrere Beschleunigungssensoren auf, so dass auf Grundlage der Messwerte der Beschleunigungssensoren auf die Orientierung der tragbaren Vorrichtung geschlossen werden kann. Handelt es sich bei der tragbaren Vorrichtung um eine Datenbrille, so entspricht die Orientierung der tragbaren Vorrichtung der Blickrichtung des Nutzers.

Durch Kombination der Informationen über die Position der tragbaren Vorrichtung und der Orientierung (insbesondere Blickrichtung) kann die Position des Werkstücks abgeleitet werden.

Ferner kann die tragbare Vorrichtung ein Audiosystem mit einer Sprachsteuerungsfunktion aufweisen, wodurch die Bedienbarkeit weiter vereinfacht wird.

Der Datenhandschuh interagiert mit der tragbaren Vorrichtung insbesondere zur Gestensteuerung. Ein Datenhandschuh ermöglicht beispielweise eine Gestensteuerung außerhalb des Sichtfeldes des Nutzers. Ferner kann ein Datenhandschuh in einer alternativen oder zusätzlichen Anwendung dazu verwendet werden, dem Nutzer ein haptisches Feedback zu vermitteln.

Ein solcher Datenhandschuh kann vorteilhafterweise mit einer Datenbrille als tragbarer Vorrichtung zum Einsatz kommen, um die Nutzungsmöglichkeiten für den Anwender weiter zu steigern.

Der Bearbeitungsschritt oder Handhabungsschritt am Werkstück kann ausgewählt aus: Zuschneiden des Werkstücks (W), spanende Kantenbearbeitung, Schleifen, Kaschieren, Lackieren, Einbringen einer Bohrung, Aufbringen eines Beschichtungsmaterials, insbesondere eines Kantenmaterials, Bedrucken des Werkstücks, Anbringen eines Beschlags, Transportieren, Stapeln, Verpacken, oder der Nachverfolgung der Montage von Elementen oder Baugruppen.

Ferner offenbart die Anmeldung ein System, insbesondere zur Durchführung eines Verfahrens gemäß einem der vorangegangenen Ausführungsformen. Das System umfasst: eine tragbare Vorrichtung mit einer Sensoreinheit, insbesondere einer Kamera, die eingerichtet ist, ein Werkstück vor, während und/oder nach Durchführung eines Bearbeitungsschrittes oder eines Handhabungsschrittes zu erfassen und vorrichtungsseitig gewonnene Informationen über das Werkstück zu ermitteln und zu übertragen, und ein Fertigungsleitsystem mit einer Datenbank, wobei das Fertigungsleitsystem eingerichtet ist, basierend auf den übertragenen vorrichtungsseitig gewonnenen Informationen einen werkstückspezifischen Datensatz in der Datenbank anzulegen oder einen in der Datenbank hinterlegten werkstückspezifischen Datensatz zu aktualisieren.

Die tragbare Vorrichtung ist eine Datenbrille, wobei ferner bevorzugt ein Datenhandschuh zur Gestensteuerung vorgesehen ist.

Ferner ist bevorzugt, dass die tragbare Vorrichtung ein Audiosystem mit einer Sprachsteuerungsfunktion aufweist. Somit kann die Bedienbarkeit weiter vereinfacht werden.

### Kurze Beschreibung der Zeichnungen

- Fig. 1: ist eine schematische Ansicht zur Darstellung individualisierter Fertigungsabläufe und deren Überwachung.
- Fig. 2: zeigt eine Werkstückidentifikation mit einer tragbaren Vorrichtung.

### Detaillierte Beschreibung der bevorzugten Ausführungsform

Nachfolgend wird anhand der beigefügten Figuren eine bevorzugte Ausführungsform der vorliegenden Erfindung im Detail erläutert. Weitere in diesem Zusammenhang genannte Modifikationen bestimmter Einzelmerkmale können jeweils miteinander kombiniert werden, um neue Ausführungsformen auszubilden.

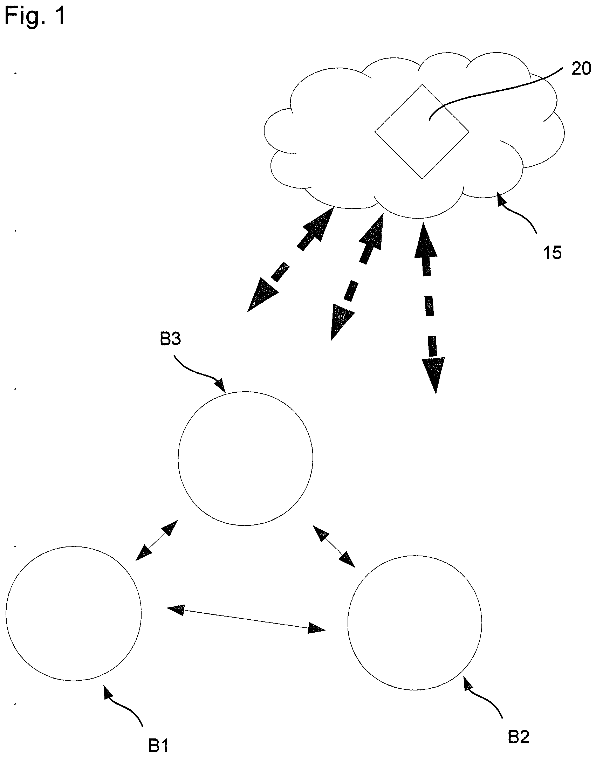

Die vorliegende Ausführungsform ist auf einen Fertigungsprozess zur Bearbeitung eines Werkstücks gerichtet, welches zumindest abschnittsweise aus Holz oder Holzwerkstoffen besteht, nämlich einer Vollholzplatte, einer Schichtholzplatte, einer Spanplatte, einer MDF-Platte, einer HDF-Platte o.Ä. Derartige Werkstücke werden bevorzugt im Bereich der Möbel- und Bauelementeindustrie eingesetzt. Rein beispielhaft kann es sich um eine Küchenarbeitsplatte, ein Regalbrett, ein Fußbodenpaneel, Türe, oder Ähnliches handeln. Bei Herstellungsprozessen, bei denen die Werkstückhandhabung und der Werkstücktransport zumindest teilweise durch Mitarbeiter durchgeführt werden, können die einzelnen Bearbeitungsmaschinen oder -stationen gewissermaßen als Insel im Herstellungsprozess betrachtet werden. Fig. 1 stellt schematisch eine solche Arbeitsumgebung dar, in der einzelne Bearbeitungsmaschinen B1-B3 räumlich voneinander getrennt sind. Ein Fertigungsleitsystem 15 überwacht den Betrieb der Bearbeitungsmaschinen B1-B3.

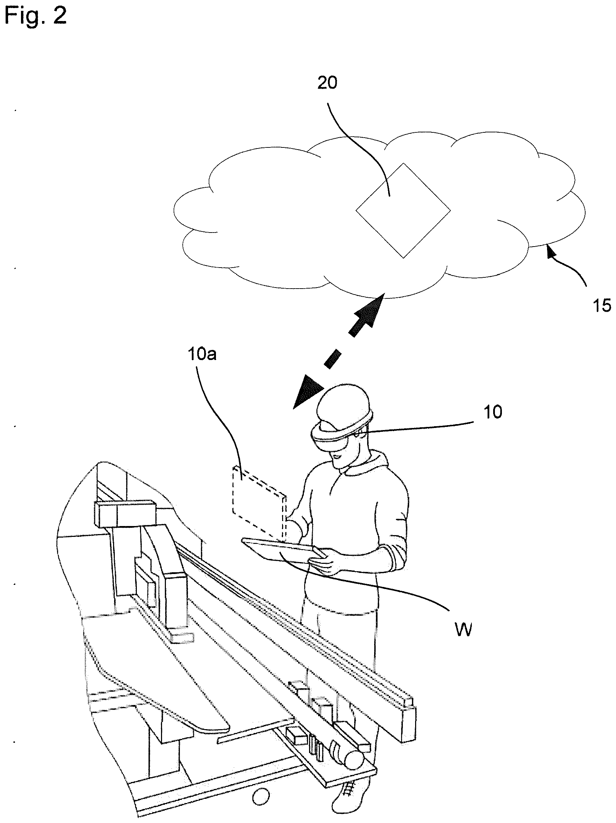

Das Entnehmen und Beschicken von Werkstücken W an den Bearbeitungsmaschinen B1-B3 erfolgt durch einen Mitarbeiter (siehe Figur 2). Hierbei werden die Werkstücke entweder einzeln von einer Bearbeitungsmaschine zur nächsten bewegt, oder die Werkstücke W werden zum Transport in einem Transportbehälter zusammengefasst.

In welcher Reihenfolge der Stapel mit den mehreren Werkstücken schließlich an einer der Bearbeitungsmaschinen B1-B3 ankommt, ist nicht abgesichert, sondern wird durch die Tätigkeit des Mitarbeiters beeinflusst. Darüber hinaus erfolgt keine Überwachung, ob während des Transports Manipulationen am Stapel stattfinden.

Gemäß der vorliegenden Erfindung wird eine tragbare Vorrichtung 10 (Smart-Device) in die Werkstückhandhabung und den Werkstücktransport eingebunden. Im vorliegenden Ausführungsbeispiel ist die tragbare Vorrichtung eine Datenbrille 10, die über eine Sensoreinheit, insbesondere eine Kamera, verfügt. Mit der Datenbrille 10 kann dem Nutzer ein virtuelles Display oder virtueller Touchscreen 10a, das/der in Fig. 2 schematisch dargestellt ist, angezeigt werden. Nachfolgend wird allgemein auf eine "Datenbrille" Bezug genommen.

Die Datenbrille 10 ist über eine drahtlose Datenverbindung mit einer Datenbank 20 des Fertigungsleitsystems 15 in Verbindung, und kann dazu verwendet werden, mittels der Kamera u.a. die Identität eines Werkstücks W zu ermitteln.

Die Datenbrille 10 verfügt hierzu über ein Datenübertragungsmodul, welches vorzugsweise in ein lokales Netzwerk eingebunden ist. Das lokale Netzwerk kann beispielsweise ein drahtloses lokales Netzwerk (WLAN) sein. Somit besteht bei entsprechender Ausstattung der Fertigungshalle stets eine Datenverbindung zwischen der Datenbrille 10 und dem Fertigungsleitsystem 15, welches vorzugsweise auf einem zentralen Server ausgeführt wird und die Datenbank 20 umfasst.

Solange ein Werkstück W innerhalb einer Bearbeitungsmaschine oder innerhalb eines Systems, zusammengesetzt aus mehreren Bearbeitungsmaschinen und Transportsystemen vorliegt, können werkstückspezifische Daten der Datenbank 20 mitgeteilt werden, da in der Datenbank 20 parallel zur Bearbeitung des realen Werkstücks im Fertigungsleitsystem 15 ein digitaler Zwilling des Werkstücks "mitgeführt" wird.

Sobald ein Mitarbeiter in den Herstellungsprozess eingreift, wird durch die Datenbrille 10, bzw. deren Kamera (beispielsweise 3D-Kamera), ein Werkstück W erkannt und mit dem entsprechenden Datensatz in der Datenbank abgeglichen. Darüber hinaus ist es möglich, Veränderungen am Werkstück W wie beispielsweise eine Verkleinerung des Werkstücks W durch eine erfolgte Abtrennung eines Teilstücks zu erkennen und den werkstückspezifischen Datensatz zu aktualisieren.

Insbesondere wird dabei die Art des Handhabungsschrittes, die Position des Eingriffs usw. erkannt, da die Datenbrille 10 mit entsprechenden Sensoren ausgestattet ist. Neben der bereits genannten Kamera verfügt die Datenbrille über einen Sensor zur Bestimmung der Position der Datenbrille 10 (insbesondere Triangulationsverfahren, beispielsweise über Bluetooth oder das WLAN-Netzwerk). Ferner können Beschleunigungssensoren zum Erfassen von Beschleunigungen vorgesehen sein, um die Blickrichtung des Nutzers zu ermitteln. Durch Kombination der Positionsdaten der Datenbrille und der Informationen bzgl. der Blickrichtung kann die Position des erfassten Werkstücks ermittelt werden.

Nachdem es sich um bei der tragbaren Vorrichtung um eine Datenbrille 10 handelt, ist die Sensorik nicht ortsgebunden, sondern diese wird durch den Mitarbeiter an jede beliebige Position mitgetragen. Auf diese Weise wird ermittelt, wo und auf welche Weise der Mitarbeiter auch an undefinierten Stellen (also nicht nur am Ein- und Ausgang einer Bearbeitungsmaschine) in den Herstellungsprozess eingreift.

Rein beispielhaft kann der Mitarbeiter zunächst einen Werkstücktransport durchführen, und während des Transports die Reihenfolge der Werkstücke W im Werkstückstapel verändern. Die mitgeführte Datenbrille 10, bzw. deren Sensorik, erkennt die Manipulation, und teilt dem Fertigungsleitsystem 15 die geänderte Situation mit. Folglich wird der werkstückspezifische Datensatz in der Datenbank 20 des Fertigungsleitsystems 15 aktualisiert.

Darüber hinaus hat der Mitarbeiter die Möglichkeit, durch die Datenbrille direkt an einem Werkstück W relevante Daten angezeigt zu bekommen, wie bspw. die Bearbeitungshistorie, Handlungsanweisungen für einen nächsten Arbeitsschritt, Sicherheitshinweise, usw..

Dabei können bei Bedarf direkt werkstückspezifische Daten abgeändert werden, ohne dass ein Bedienterminal aufgesucht werden müsste.

Ferner bietet die Datenbrille 10 die Möglichkeit, neben der Änderung der werkstückspezifischen Daten parallel auch Einstellungen an der Maschine vorzunehmen. Hierzu wird dem Mitarbeiter ein virtuelles Display 10a angezeigt. Dabei kann der Mitarbeiter mit projizierten Inhalten interagieren. Die Interaktion kann sowohl durch Gesten, als auch durch Sprachsteuerung erfolgen.

Eine Anwendung im Falle der Datenbrille 10 ist das virtuelles Display 10a (beispielsweise virtueller Touchscreen), bei dem mit einer Projektion der Bedienoberfläche des Bedienterminals der Maschine am momentanen Ort des Bedieners die Maschine bedient wird.

Um die Benutzerfreundlichkeit weiter zu erhöhen, kann die Projektion der Bedienoberfläche auf einer Fläche wie bspw. Werkstück, Maschinen oder auch Hand des Mitarbeiters erzeugt werden, wodurch bei der Interaktion ein haptisches Feedback durch die Fläche erfolgt. Konkret wäre es möglich, auf einem eingespannten Werkstück in einer CNC-Maschine, die Programmierung der Bearbeitung direkt auf dem Werkstück durchzuführen. Alternativ ist es möglich, bei Wartungsarbeiten an einer Bearbeitungsmaschine entfernt von einem Bedienterminal die Bedienoberfläche am Maschinengehäuse zu erzeugen.

Beim Transportieren der Werkstücke in der Produktion kann dem Mitarbeiter eine Art Navigation zur nächsten Bearbeitungsmaschine gegeben werden. Durch die erfasste Position des Mitarbeiters kann auf die Position der transportierten Werkstücke geschlossen und diese damit nachverfolgt werden.

Die Navigation beschränkt sich nicht auf den Transport von Werkstücken in der Produktion, sondern kann den Mitarbeiter auch zu Störstellen innerhalb der Anlage führen oder diese Markieren und dort interaktiv durch die Fehlerbehebung assistieren. Ist die Ursache des Fehlers bekannt, kann dem Mitarbeiter direkt die Vorgehensweise zur Lösung des Störzustandes visualisiert werden. Ferner ist ein Videochat mit einem Fernservicemitarbeiter mittels der Datenbrille 10 möglich. Entsprechende Informationen können über das virtuelle Display 10a, das in Fig. 2 schematisch dargestellt ist, angezeigt werden.

Über die Sensorik ist hierbei eine automatische Dokumentation der Wartung möglich, zudem kann geprüft werden, ob die Montage von sicherheitsrelevanten Komponenten sachgemäß erfolgte. Die Produktionsbereitschaft der Maschine oder Anlage kann somit schneller wiederhergestellt und die Ausfallzeiten des Produktionsprozesses verkürzt werden.

Bei der Navigation zu Störstellen ist zudem denkbar, dass den einzelnen Mitarbeitern in der Produktion Fähigkeiten zugeordnet werden können. Ist der Fehler und die Fehlerart bekannt, kann entsprechend ein Mitarbeiter mit den nötigen Fähigkeiten alarmiert und zur Störstelle geführt werden. So wird vermieden, dass mehrere Mitarbeiter gebunden und erst der Fachmann für diese Fehlerart gesucht werden muss.

Im Zuge von Wartungsarbeiten, wenn Teile einer Maschine und damit Sicherheitsfunktionen abgeschaltet werden, können durch die tragbare Vorrichtung, insbesondere Datenbrille 10, Gefahrenstellen (im Sichtfeld) markiert und somit die Sicherheit gesteigert werden.

Darüber hinaus kann als weiterer Vorteil durch die Datenbrille 10 die Bearbeitungsqualität und deren Vollständigkeit überprüft werden. Rein beispielhaft kann somit festgestellt werden, ob die durch einen vorangegangenen Bearbeitungsschritt vorgeschriebene Maßgenauigkeit eingehalten wurde und ob bestimmte Bearbeitungsschritte durchgeführt wurden, bspw. ob die entsprechenden Bohrlöcher an bestimmten Positionen vorhanden sind, ob ein bestimmtes Kantenmaterial aufgebracht wurde, ob das Kantenmaterial mit dem Deckmaterial des Werkstücks übereinstimmt, ob im Werkstück bestimmte Radien mit entsprechender Maßgenauigkeit eingebracht wurden, ob Sekundärteile in korrekter Weise und in korrekten Positionen am Werkstück angebracht wurden (Scharniere), usw..

In einer weiteren Ausführungsform ist bei der Qualitätskontrolle mittels der Datenbrille 10 ein maschinelles Lernen möglich. Ist bei der Kontrolle die Qualität nicht mehr im Toleranzbereich, so müssen Maschineneinstellungen geändert oder Wartungsarbeiten durchgeführt werden. Dabei kann über die Datenbrille 10 von erfahrenen Mitarbeitern gelernt werden, anhand welcher Parameter die Werkstückqualität in welcher Weise beeinflusst wird. Ist es durch die Sensorik möglich, Qualitätsmerkmale der Werkstücke zu prüfen, so können bedarfsgerecht Vorschläge für die Maschinenoptimierung gegeben werden, um die Produktqualität wiederherzustellen.

Nachfolgend soll anhand eines Beispiels ein Verfahrensablauf beschrieben werden. Im Rahmen des beschriebenen Verfahrens kommt die bereits genannte Datenbrille 10 zum Einsatz, die über eine Kamera verfügt, mit der ein Werkstück W und dessen Eigenschaften identifiziert werden können. Darüber hinaus können dem Nutzer mit der Datenbrille 10 in einer "erweiterten Realität" ("augmented reality") Handlungsanweisungen angezeigt, Warnhinweise gegeben oder ein Bedienfeld zur Aktivierung, Betätigung und Überwachung einer Bearbeitungsmaschine eingeblendet werden.

Als Handlungsanweisung kann dem Mitarbeiter beispielsweise angezeigt werden, in welcher Reihenfolge bestimmte Werkstücke einer Bearbeitungsmaschine zuzuführen sind und in welcher Ausrichtung diese in die Maschine eingebracht werden sollen. Den Handlungsanweisungen ist beispielsweise auch ein Hinweis zuzuordnen, dass eine fehlerhafte Ausführung eines vorangegangen Arbeitsschritts festgestellt wurde, dem Mitarbeiter ein Korrekturvorschlag angeboten wird.

Nachdem der Mitarbeiter die Datenbrille 10 stets mit sich führt, kann diese zur Assistenz im gesamten Fertigungsprozess verwendet werden.

Wird ein Werkstück erkannt, dem noch keine Identität zugewiesen wurde, so können mit der Sensoreinheit der Datenbrille die Eigenschaften des Werkstücks bestimmt werden, beispielsweise unter Einsatz einer 2D- oder 3D-Kamera. Die Identität des Werkstücks kann anhand von werkstückspezifischen Parametern ermittelt oder definiert werden, welche Parameter das Werkstück charakterisieren.

Hierzu zählen Werkstückdimensionen (Breite, Höhe, Dicke), Farbe, Oberflächeneigenschaften, Glanzgrad der Werkstückoberfläche, einer Materialeigenschaft, einem Kantenmaterial, einer Beschichtung und/oder dem Nut- oder Bohrbild des Werkstücks. Werden die Eigenschaften eines Werkstücks durch die Sensorik der Datenbrille erfasst, können diese zur Identitätsbestimmung verwendet werden.

Zunächst nimmt ein Mitarbeiter ein neues Werkstück W händisch von einem Werkstückstapel. Die Werkstücke im Werkstückstapel sind noch nicht in der Datenbank 20 des Fertigungsleitsystems 15 hinterlegt. Durch die Kamera der Datenbrille wird das Werkstück optisch erkannt und dem Werkstück W eine individualisierte Kennung bzw. ein individualisierter Datensatz zugewiesen bzw. erstellt. Das Fertigungsleitsystem 15 kennt somit das neue Werkstück W, welches nunmehr Eingang in den Herstellungsprozess finden soll.

Der Mitarbeiter trägt das Werkstück W nunmehr zu einer ersten Bearbeitungsmaschine B1, mit der das Werkstück W auf ein bestimmtes Maß zugeschnitten werden soll. Nachdem der Mitarbeiter das Werkstück W in die Bearbeitungsmaschine B1 eingelegt hat, werden die Bearbeitungsschritte gemäß Auftrag durchgeführt. Sensoren der Bearbeitungsmaschine erkennen das Werkstück W und dokumentieren die Durchführung der entsprechenden Bearbeitungsschritte. Basierend auf diesen Informationen wird der werkstückspezifische Datensatz in der Datenbank 20 aktualisiert.

Nachdem die einzelnen Bearbeitungsschritte durchgeführt wurden, wird das Werkstück W aus der ersten Bearbeitungsmaschine B1 herausgefördert. An dieser Stelle hat der Mitarbeiter die Möglichkeit, das Werkstück W zu entnehmen und einer zweiten Bearbeitungsmaschine B2 zuzuführen.

Im vorliegenden Beispiel erfolgt der Transport zwischen der ersten Bearbeitungsmaschine B1 und der zweiten Bearbeitungsmaschine B2 mit einer Transporteinheit (beispielsweise ein Transportwagen). Dabei werden zunächst mehrere Werkstücke durch den Mitarbeiter auf die Transporteinheit gestapelt. Nachdem auf diese Weise eine bestimmte Anzahl von Werkstücken auf der Transporteinheit gesammelt wurde, kann der Mitarbeiter aus eigenem Ermessen entscheiden, die gestapelten Werkstücke der zweiten Bearbeitungsmaschine B2 zuzuführen.

Nachdem der Mitarbeiter mit der Transporteinheit die zweite Bearbeitungsmaschine B2 erreicht hat, wird der Mitarbeiter die Werkstücke einzeln aufnehmen und in einem Beschickungs- oder Einlaufbereich der zweiten Bearbeitungsmaschine B2 zuführen.

Hierbei erkennt die Datenbrille 10 des Mitarbeiters, welches Werkstück W dieser aufnimmt, indem die Kamera der Datenbrille 10 das Werkstück W erkennt und mit den zuletzt hinterlegten Daten des individualisierten Datensatzes abgleicht.

Nachdem das Werkstück W auf diese Weise zugeordnet werden konnte, kann der Mitarbeiter das Werkstück W in die zweite Bearbeitungsmaschine B2 einlegen, und basierend auf einer für den individualisierten Datensatz hinterlegten Auftragsliste werden in der zweiten Bearbeitungsmaschine B2 bestimmte Bearbeitungsvorgänge durchgeführt.

Beispielsweise werden die Schmalseiten des Werkstücks W mit einem Kantenmaterial versehen. Nachdem das Werkstück W mehrere Schmalseiten aufweist, finden diese Bearbeitungsvorgänge bei einer solchen Maschine üblicherweise im Umlauf statt. Dies bedeutet, dass, nachdem eine erste Schmalseite mit einem Kantenmaterial versehen wurde, das Werkstück über ein Transportsystem wieder dem Einlaufbereich der Bearbeitungsmaschine zugeführt wird und in einem zweiten Durchlauf durch die zweite Bearbeitungsmaschine B2 das Werkstücks W mit einem weiteren Kantenmaterial versehen wird.

Dabei wird der zweiten Bearbeitungsmaschine B2 über das Fertigungsleitsystem 15 mitgeteilt, in welchem Verfahrensstadium sich das Werkstück W befindet, insbesondere wie viele Seiten bereits mit einem Kantenmaterial versehen wurden, bzw. ob ein weiterer Durchlauf durch die zweite Bearbeitungsmaschine B2 erforderlich ist.

Nachdem die Bearbeitung an der zweiten Bearbeitungsmaschine B2 durchgeführt wurde, hat der Mitarbeiter die Möglichkeit, das Werkstück W im Auslaufbereich der zweiten Bearbeitungsmaschine B2 aufzunehmen.

Mittels der Datenbrille 10 wird nunmehr das entsprechende Werkstück W identifiziert. Dabei kann neben einer Werkstückidentifikation überprüft werden, ob die für die zweite Bearbeitungsmaschine B2 beauftragten Bearbeitungsschritte korrekt und vollständig durchgeführt wurden, bspw. ob alle Schmalseiten mit einem Kantenmaterial versehen sind und die Bearbeitungsqualität bestimmten Anforderungen entspricht.

Im vorliegenden Ausführungsbeispiel ist rein beispielhaft eine dritte Bearbeitungsmaschine B3 vorgesehen, der der Mitarbeiter das Werkstück W zuführen kann. Die Anzahl der Bearbeitungsmaschinen ist dabei nicht begrenzt.

Darüber hinaus ist es möglich, dass das Werkstück W nach einer Bearbeitung durch die dritte Bearbeitungsmaschine B3 wieder der ersten Bearbeitungsmaschine B1 oder der zweiten Bearbeitungsmaschine B2 zugeführt wird, beispielsweise um einen weiteren Schnitt wie eine Bohrung durchzuführen.

## Patentansprüche

1. Verfahren zur Überwachung eines Fertigungsprozesses, umfassend die Schritte:
Erfassen eines Werkstücks (W) mit einer Sensoreinheit einer tragbaren Vorrichtung (10), wobei das Werkstück ein plattenförmiges oder ein Freiformflächen aufweisendes Werkstück ist, nämlich eine Vollholzplatte, eine Spanplatte, eine MDF-Platte, eine HDF-Platte, oder eine Platte aus Verbundwerkstoffen,
Senden der durch die Sensoreinheit erfassten Informationen an eine Datenbank (20) und Anlegen eines werkstückspezifischen Datensatzes,
Erfassen des Werkstücks (W) vor, während und/oder nach Durchführung eines Bearbeitungsschrittes oder eines Handhabungsschrittes am Werkstück (W) durch die Sensoreinheit der tragbaren Vorrichtung (10),
Aktualisieren des in der Datenbank (20) hinterlegten Datensatzes vor, während und/oder nach Durchführung eines Bearbeitungsschrittes oder Handhabungsschritts am Werkstück,
wobei die tragbare Vorrichtung (10) eine Datenbrille (10) ist, und
ferner ein Datenhandschuh vorgesehen ist, der mit der tragbaren Vorrichtung (10) interagieren kann.

2. Verfahren nach einem der vorangegangenen Ansprüche, **dadurch gekennzeichnet, dass** die tragbare Vorrichtung (10) dem Nutzer Handlungsanweisungen, Warnhinweise, eine Bestätigung einer Aktivität und/oder ein Bedienfeld zur Aktivierung, Betätigung und/oder Überwachung einer Bearbeitungsmaschine (B1-B3) anzeigt, insbesondere in einer erweiterten Realität.

3. Verfahren nach einem der vorangegangenen Ansprüche, **dadurch gekennzeichnet, dass** das Erfassen des Werkstücks berührungslos, insbesondere mittels der als Kamera ausgebildeten Sensoreinheit, weiter bevorzugt einer 3D-Kamera, erfolgt.

4. Verfahren nach einem der vorangegangenen Ansprüche, **dadurch gekennzeichnet, dass** das Erfassen des Werkstücks (W) basierend auf zumindest einer Werkstückdimension, wie der Breite, Höhe, Dicke und/oder der Fläche einer Seite des Werkstücks, der Farbe des Werkstücks, dem Glanzgrad der Werkstückoberfläche, einer Materialeigenschaft, einem Kantenmaterial, einer Beschichtung und/oder dem Nut- oder Bohrbild des Werkstücks vorgenommen wird.

5. Verfahren nach einem der vorangegangenen Ansprüche, **dadurch gekennzeichnet, dass** die tragbare Vorrichtung (10) ein Datenübertragungsmodul zur drahtlosen Datenübertragung aufweist, welches insbesondere in ein lokales Netzwerk eingebunden ist.

6. Verfahren nach einem der vorangegangenen Ansprüche, **dadurch gekennzeichnet, dass** die tragbare Vorrichtung (10) einen Positionssensor, umfasst, wobei die Position zum Zeitpunkt des Erfassens des Werkstücks ermittelt wird.

7. Verfahren nach einem der vorangegangenen Ansprüche, **dadurch gekennzeichnet, dass** die tragbare Vorrichtung (10) einen oder mehrere Beschleunigungssensoren umfasst.

8. Verfahren nach einem der vorangegangenen Ansprüche, **dadurch gekennzeichnet, dass** die tragbare Vorrichtung (10) ein Audiosystem mit einer Sprachsteuerungsfunktion aufweist.

9. Verfahren nach einem der vorangegangenen Ansprüche, **dadurch gekennzeichnet, dass** der Datenhandschuh zur Gestensteuerung vorgesehen ist.

10. Verfahren nach einem der vorangegangenen Ansprüche, **dadurch gekennzeichnet, dass** der Bearbeitungsschritt oder Handhabungsschritt am Werkstück ausgewählt ist aus: Zuschneiden des Werkstücks (W), spanende Kantenbearbeitung, Schleifen, Kaschieren, Lackieren, Einbringen einer Bohrung, Aufbringen eines Beschichtungsmaterials, insbesondere eines Kantenmaterials, Bedrucken des Werkstücks, Anbringen eines Beschlags, Transportieren, Stapeln, Verpacken oder Montage von Bauteilen.

## Claims

1. Method for monitoring a manufacturing process, comprising the steps:
scanning a workpiece (W) with a sensor unit of a wearable device (10), wherein the workpiece is a panel-shaped or free-form workpiece, namely a solid wood panel, a chipboard panel, an MDF board, an HDF board or a composite panel,
sending the information collected by the sensor unit to a database (20) and creating a workpiece-specific data set,
scanning the workpiece (W) before, during and/or after carrying out a processing step or a handling step on the workpiece (W) by means of the sensor unit of the wearable device (10),
updating the data set stored in the database (20) before, during and/or after carrying out a processing step or handling step on the workpiece,
wherein the wearable device (10) is a pair of smart glasses (10), and
a data glove is also provided which can interact with the wearable device (10).

2. Method according to one of the preceding claims, **characterised in that** the wearable device (10) displays to the user instructions for action, warnings, a confirmation of an activity and/or a control panel for activating, operating and/or monitoring a processing machine (B1-B3), in particular in augmented reality.

3. Method according to one of the preceding claims, **characterised in that** the scanning of the workpiece is carried out in a contact-free manner, in particular by means of the sensor unit which is designed as a camera, more preferably a 3D camera.

4. Method according to one of the preceding claims, **characterised in that** the scanning of the workpiece (W) is carried out on the basis of at least one workpiece dimension, such as the width, height, thickness and/or surface area of one side of the workpiece, the colour of the workpiece, the gloss level of the workpiece surface, a material property, an edge material, a coating and/or the grooving or drilling pattern of the workpiece.

5. Method according to one of the preceding claims, **characterised in that** the wearable device (10) has a data transmission module for wireless data transmission which is in particular integrated into a local network.

6. Method according to one of the preceding claims, **characterised in that** the wearable device (10) includes a position sensor, the position being determined at the time the workpiece is scanned.

7. Method according to one of the preceding claims, **characterised in that** the wearable device (10) includes one or more acceleration sensors.

8. Method according to one of the preceding claims, **characterised in that** the wearable device (10) has an audio system with a voice control function.

9. Method according to one of the preceding claims, **characterised in that** the data glove is intended for gesture control.

10. Method according to one of the preceding claims, **characterised in that** the processing step or handling step on the workpiece is selected from:
cutting the workpiece (W) to size, machining edges, grinding, laminating, painting, drilling a hole, applying a coating material, in particular an edge material, printing the workpiece, attaching a fitting, transporting, stacking, packaging or assembling components.

## Revendications

1. Procédé de surveillance d'un processus de fabrication, comprenant les étapes :
de détection d'une pièce (W) avec une unité de capteur d'un dispositif portatif (10), la pièce étant une pièce en forme de panneau ou une pièce présentant des faces à forme libre, à savoir un panneau de bois massif, un panneau de particules, un panneau de fibres moyenne densité, un panneau de fibres haute densité, ou un panneau composé de matériaux composites,
d'envoi des informations détectées par l'unité de capteur à une base de données (20) et de création d'un ensemble de données spécifique à la pièce,
de détection, par l'unité de capteur du dispositif portatif (10), de la pièce (W) avant, pendant et/ou après la mise en oeuvre d'une étape d'usinage ou d'une étape de manipulation sur la pièce (W),
de mise à jour de l'ensemble de données enregistré dans la base de données (20) avant, pendant et/ou après la mise en oeuvre d'une étape d'usinage ou d'une étape de manipulation sur la pièce,
dans lequel le dispositif portatif (10) est des lunettes intelligentes (10), et
un gant à données est prévu en outre, qui est apte à interagir avec le dispositif portatif (10).

2. Procédé selon l'une quelconque des revendications précédentes, **caractérisé en ce que** le dispositif portatif (10) indique à l'utilisateur des instructions de manipulation, des avertissements, une confirmation d'une activité et/ou un panneau de commande pour l'activation, la confirmation et/ou la surveillance d'une machine d'usinage (B1-B3), en particulier dans une réalité augmentée.

3. Procédé selon l'une quelconque des revendications précédentes, **caractérisé en ce que** la détection de la pièce a lieu sans contact, en particulier au moyen d'une unité de capteur réalisée en tant que caméra, de manière davantage préférée d'une caméra 3D.

4. Procédé selon l'une quelconque des revendications précédentes, **caractérisé en ce que** la détection de la pièce (W) est réalisée sur la base d'au moins une dimension de pièce, comme la largeur, la hauteur, l'épaisseur et/ou la surface d'un côté de la pièce, la couleur de la pièce, le degré de brillance de la surface de pièce, une propriété de matériau, un matériau de bord, un revêtement et/ou le gabarit de rainure ou de perçage de la pièce.

5. Procédé selon l'une quelconque des revendications précédentes, **caractérisé en ce que** le dispositif portatif (10) présente un module de transmission de données pour la transmission de données sans fil, lequel est intégré en particulier dans un réseau local.

6. Procédé selon l'une quelconque des revendications précédentes, **caractérisé en ce que** le dispositif portatif (10) comprend un capteur de position, dans lequel la position est déterminée au moment de la détection de la pièce.

7. Procédé selon l'une quelconque des revendications précédentes, **caractérisé en ce que** le dispositif portatif (10) comprend un ou plusieurs capteurs d'accélération.

8. Procédé selon l'une quelconque des revendications précédentes, **caractérisé en ce que** le dispositif portatif (10) présente un système audio avec une fonction de commande vocale.

9. Procédé selon l'une quelconque des revendications précédentes, **caractérisé en ce que** le gant de données est prévu pour la commande gestuelle.

10. Procédé selon l'une quelconque des revendications précédentes, **caractérisé en ce que** l'étape d'usinage ou l'étape de manipulation sur la pièce est choisie parmi : la découpe de la pièce (W), l'usinage de bords par enlèvement de copeaux, la rectification, le contrecollage, la mise en peinture, la réalisation d'un alésage, l'application d'un matériau de revêtement, en particulier d'un matériau de bord, l'impression de la pièce, l'application d'une ferrure, le transport, l'empilement, le conditionnement ou le montage de composants.
